(19) **Europäisches Patentamt**

**European Patent Office**

**Office européen des brevets**

(11) **EP 0 913 280 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(51) Int Cl.⁷: **B60G 17/04**, B60G 9/02

(21) Anmeldenummer: **98119511.8**

(22) Anmeldetag: **15.10.1998**

(54) **Hydropneumatische Achsfederung für angetriebene Fahrzeugachsen**

Hydrodynamic axle spring for driven vehicle axles

Ressort d'essieu hydropneumatique pour essieux de véhicules entraînés

(84) Benannte Vertragsstaaten:
**AT DE FI FR GB IT**

(30) Priorität: **31.10.1997 DE 19748224**

(43) Veröffentlichungstag der Anmeldung:
**06.05.1999 Patentblatt 1999/18**

(73) Patentinhaber: **DEERE & COMPANY**
**Moline, Illinois 61265-8098 (US)**

(72) Erfinder:
• **Teich, Michael**
**68199 Mannheim (DE)**
• **Zahn, Klaus**
**76684 Östringen (DE)**
• **Heim, Werner**
**67159 Friedelsheim (DE)**
• **Trinler, Martin**
**68229 Mannheim (DE)**
• **Schwegler, Heinz**
**68809 Neulussheim (DE)**
• **Rudy, Ewald**
**74889 Sinsheim (DE)**
• **Glaser, Fritz Dr.**
**66482 Zweibrücken (DE)**
• **Altherr, August**
**67661 Kaiserslautern (DE)**

(74) Vertreter: **Lau-Loskill, Philipp, Dipl.-Phys. et al**
**Deere & Company,**
**European Office,**
**Patent Department**
**68140 Mannheim (DE)**

(56) Entgegenhaltungen:
EP-A2- 0 670 230          DE-A1- 3 834 693
DE-A1- 4 138 208          DE-A1- 4 308 460
DE-A1- 19 541 823         DE-C1- 4 242 448
US-A- 3 845 833

**Beschreibung**

Die Erfindung betrifft ein hydropneumatisches Vorderachsfederungssystem für die angetriebehe Achse eines landwirtschaftlichen Arbeitsfahrzeugs, insbesondere für die Vorderachse eines Ackerschleppers, mit wenigstens einem zwischen Fahrzeugaufbau und Achskörper angeordneten Hydraulikzylinder, dessen Ringraum und dessen Druckraum je mit wenigstens einem Druckmittelspeicher in Verbindung stehen, und mit einer durch eine Hydraulikpumpe gespeisten Ventileinrichtung zur Niveauregelung, die den Druck der Druckmittelspeicher in Abhängigkeit der Belastung des Achskörpers einstellt.

Um für höhere Fahrgeschwindigkeiten auf Straßen, Feldwegen und in Kurven die Fahrsicherheit und den Fahrkomfort zu erhöhen, kann die Vorderachse landwirtschaftlicher Arbeitsfahrzeuge federnd am Fahrzeugrumpf aufgehängt werden. Hierfür können ein oder mehrere Hydraulikzylinder zwischen dem Fahrzeugrumpf und der Vorderachse angeordnet werden, deren Druckräume und/oder Ringräume mit Druckspeichern und einer durch eine Hydraulikpumpe gespeisten Niveauregeleinrichtung in Verbindung stehen. Für Frontladerarbeiten oder für die Bodenbearbeitung wird das Federungssystem mechanisch oder hydraulisch gesperrt (Peter Pickel et. al. "Welche Chancen haben gefederte Traktoren" in der Deutschen Zeitschrift "Landtechnik" 10/90, Seiten 363 - 366). Dies geschieht beispielweise durch Sperrung der Zuleitungen zum Hydraulikzylinder oder durch Leeren des Druckraums des Hydraulikzylinders (DE-A-195 41 823), wobei der Fahrzeugrumpf fest auf die Vorderachse gedrückt wird (Deutsche Zeitschrift "profi" Nr. 8/96, Seiten 14 - 17).

Die Blockierung der Federung wird u. a. als erforderlich angesehen, um Auswirkungen auf das Regelverhalten eines Krafthebers zu vermeiden (DE-A-38 34 693). Insbesondere beim Pflügen wird die Vorderachsfederung als hinderlich angesehen (DE-C-42 42 448), so daß eine manuell veranlaßte Abschaltung der Federung vorgeschlagen wird.

Auch bei Einsätzen mit Frontlader, Frontgrubber oder Frontpacker wird eine Federung als störend angesehen, da es hierbei auf eine besonders exakte Geräteführung ankommt. Es wird daher vorgeschlagen, die Federung über eine Drucktastenbetätigung zu sperren (Prospekt der Fa. Fendt: "Farmer", HD11/95/15, Seite 14).

Es wurde auch ein Bedienteil vorgeschlagen (DE-A-43 08 460), das der Bedienungsperson eine Wahlmöglichkeit zwischen einer manuellen oder einer automatischen Sperre der Federung gibt, wobei die automatische Sperre in Abhängigkeit von bestimmten Kriterien, z. B. Fronladerarbeiten oder Arbeiten mit dem Pflug, erfolgt.

In der DE-A-42 42 448 wird desweiteren vorgeschlagen, bei Ausfall der Elektrik ein Sperrventil zwischen Hydraulikzylinder und Druckspeicher automatisch zu schließen, damit der Traktor, wenn auch bei geringerem Komfort, arbeitsbereit bleibt.

Durch die gattungsgemäße EP-A-0 670 230 ist eine Druckmittelversorgung für eine hydropneumatische, niveaugeregelte Achsfederung eines Arbeitsfahrzeugs bekannt geworden. Diese enthält eine von einer Hydraulikpumpe gespeiste Hydraulikanlage, an die Druckspeicher sowie mit diesen in Verbindung stehende oberhalb und unterhalb eines Kolbens liegende Zylinderräume von Stellzylindern der Achsfederung angeschlossen sind. Bei Unterschreiten eines für die Einstellung des gewünschten Niveaus benötigten Drucks wird der obere Zylinderraum durch die Hydraulikpumpe über die Hydraulikanlage aufgefüllt. Um bei wahlweiser Verwendung unterschiedlicher Pumpensysteme die Druckmittelversorgung aufrechtzuerhalten, wird bei Druckmittelbedarf der Achsfederung die Betätigung eines an die Hydraulikpumpe angeschlossenen Verbrauchers willkürlich simuliert. Für gewisse Betriebseinsätze wird die Federung ausgeschaltet und die Fahrzeugachse gegenüber dem Fahrzeugaufbau blockiert, indem der Druck im oberen Zylinderraum abgelassen wird und die Fahrzeugachse durch den im zweiten Zylinderraum anstehenden Druck gegen einen Anschlag am Fahrzeugaufbau gedrückt wird.

Da die Vorderachsfederung bei hohen Belastungen der Vorderachse, wie sie beispielsweise bei Frontladerarbeiten oder bei Verwendung eines schweren Frontgeräts gegeben sein kann, immer ausgeschaltet ist, werden die mechanischen und hydraulischen Federkomponenten aus Platz- und Kostengründen auf eine relativ niedrige Belastung ausgelegt, wie sie bei Straßenfahrt gegeben ist. Dabei haben beispielsweise die Druckspeicher ein relativ geringes Speichervolumen mit einem entsprechend steilen Verlauf der Federkennlinie.

Die der Erfindung zugrunde liegende Aufgabe wird darin gesehen, ein gattungsgemäßes hydropneumatisches Achsfederungssystem für die angetriebene Achse eines landwirtschaftlichen Arbeitsfahrzeugs derart auszubilden, daß die Fahreigenschaften des Arbeitsfahrzeugs weiter verbessert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der Erfindung liegt die Erkenntnis zugrunde, daß die Aufrechterhaltung der Achsfederung, insbesondere der hydropneumatischen Vorderachsfederung, bei allen Last- und Fahrbedingungen des landwirtschaftlichen Arbeitsfahrzeugs vorteilhaft ist, was im Gegensatz zu den bisherigen Annahmen steht. Die Achsfederung bleibt insbesondere bei allen Frontladerarbeiten, bei allen Feld- und Bodenarbeiten und bei langsamen und schnellen Transportfahrten wirksam und ist unter keinen Betriebsbedingungen Vollständig sperrbar. Selbst bei Auftreten von Fehlern in hydraulischen oder elektrischen Komponenten soll die Federung aufrechterhalten und entgegen bisheriger Praxis nicht ausgeschaltet werden.

Erfindungsgemäß werden die mechanischen und hydropneumatischen Komponenten des Achsfederungssystems, insbesondere die Hydraulikzylinder, die Druckmittelspeicher, die Ventileinrichtung und die Druckversorgung, für eine Federung unter maximaler Belastung des Achskörpers ausgelegt. Die maximale durch die Federung aufzunehmende Achslast kann beispielsweise 70 kN bei einem Ackerschlepper mit einem zulässigen Gesamtgewicht von 9000 kg und einer zulässigen Nutzlast von 4000 kg betragen. Desweiteren wird erfindungsgemäß die Ventileinrichtung derart ausgebildet und derart angesteuert, daß in den Druckmittelspeichern, dem Druckraum und dem Ringraum ständig ein ausreichender Druck aufrechterhalten wird, um unter allen Last- und Fahrbedingungen des Fahrzeugs ein Federn des Achskörpers zu ermöglichen, wobei sich die Federrate auf die jeweilige Belastung des Achskörpers einstellt.

Diese Ausbildung hat sich trotz der Bedenken der Fachwelt als durchführbar und äußerst vorteilhaft herausgestellt. Die Vorteile einer Verbesserung der Fahrsicherheit, des erhöhten Fahrkomforts und der Lenkstabilität werden durch die Erfindung für alle Fahrbedingungen wirksam. Auf die Bedienungsperson übertragene Vibrationen werden reduziert, was angenehm und weniger ermüdend ist. Da sich die Bedienungsperson sehr schnell an das verbesserte stabile Fahrverhalten mit Achsfederung gewöhnt, wird sie dieses Verhalten für einen effektiveren Einsatz des Fahrzeugs nutzen. Im Vertrauen auf die Fahrstabilität wird schneller gefahren als mit Fahrzeugen ohne Achsfederung. Eine Umschaltung zwischen gefederter und ungefederter Achsaufhängung, wie sie nach dem Stand der Technik erfolgt, kann zu gefährlichen Fahrzuständen führen, weil die Bedienungsperson die Umschaltung in den ungefederten Zustand nicht immer bewußt wahrnimmt und daher das ungefederte Fahrzeug überfordert.

Im Gegensatz zu bisherigen Annahmen bringt eine Vorderachsfederung bei Frontlader- und Feldarbeiten Vorteile mit sich. Durch die Vorspannung der Druckspeicher werden die Hydraulikzylinder ständig belastet und drücken die Räder der Achse auf den Boden, so daß diese beim Überfahren von Bodenunebenheiten nicht abheben und die Übertragung von Kräften auf den Boden ständig gewährleistet ist. Daher hält der Fahrzeugrumpf beim Überfahren von Bodenunebenheiten seine Lage stabiler ein als bei ungefedertem Fahrzeug. Infolgedessen sind auch geringere Ausgleichsbewegungen durch eine hydraulische Anbaugerätelageregelung erforderlich.

Auch bei Frontladerarbeiten stellen sich die befürchteten Nachteile nicht ein. Vielmehr ist eine geeignete Niveauregelung in der Lage, lastbedingte Höhenschwankungen schnell und genau auszugleichen. Momentane Belastungsschwankungen, die beispielsweise beim Überfahren von Bodenunebenheiten auftreten, werden durch die Niveauregelung nicht ausgeglichen. Bei Frontladerarbeiten ergibt sich mit aktiver Vorderachsfederung ein ruhigeres Fahrverhalten als ohne Vorderachsfederung.

Die Erfindung wird bevorzugt bei einer pendelnd gelagerten, gefederten Achsaufhängung angewandt, wie sie durch die noch nicht veröffentlichte deutsche Patentanmeldung 196 43 263.4 der Anmelderin beschrieben und beansprucht wurde und auf deren Offenbarung hiermit Bezug genommen wird. Insbesondere sind gemäß einer bevorzugten Ausgestaltung der Erfindung zwei Hydraulikzylinder vorgesehen, deren Druckräume oben liegen und deren Kolbenstangen mit dem Achskörper verbunden sind. Die Druckräume stehen untereinander und mit einem oder mehreren parallel geschalteten Druckraumdruckspeichern in Verbindung. Die Ringräume stehen untereinander und mit einem oder mehreren parallel geschalteten Ringraumdruckspeichern unmittelbar in Verbindung.

Vorzugsweise enthält die Ventileinrichtung wenigstens ein elektromagnetisch ansteuerbares einerseits mit einer Hydraulikpumpe und einem Vorratsbehälter und andererseits mit dem Ringraum und dem Druckraum in Verbindung stehendes Niveauregelventil, welches aufgrund von durch einen Lagesensor erfaßten Abweichungen von einer Niveaumittellage über eine Steuereinheit ansteuerbar ist. Zwischen dem Niveauregelventil und dem Ringraum sowie zwischen dem Niveauregelventil und dem Druckraum des wenigstens einen Hydraulikzylinders ist je ein entsperrbares Rückschlagventil angeordnet, welches gegen einen Druckmittelrückfluß aus dem Ringraum bzw. dem Druckraum sperrt.

Eine für die vorliegende Erfindung geeignete Ventileinrichtung wird in der DE 42 42 448, auf deren Offenbarung hiermit Bezug genommen wird, im einzelnen beschrieben. Im Unterschied zu der bekannten Ventilanordnung entfällt jedoch bei dem vorliegenden erfindungsgemäßen Federungssystem ein zwischen dem Druckraum und dem zugehörigem Druckmittelspeicher angeordnetes Sperrventil, welches manuell oder automatisch schließbar ist.

Vorzugsweise ist das Gesamtnennvolumen des oder der Druckraumdruckspeicher wenigstens doppelt so groß, wie das Gesamtnennvolumen des oder der Ringraumspeicher.

Bei den Druckmittelspeicher handelt es sich beispielsweise um Stickstoffgasdruckspeicher. Sie müssen ausreichend große Volumen aufweisen, um unter allen Lastbedingungen die gewünschte Achsfederung aufrechterhalten zu können. Insbesondere soll vermieden werden, daß durch eine weiche Federung bereits bei relativ niedrigen Achslasten sich der Achskörper an den Fahrzeugaufbau anlegt oder an diesen anschlägt.

Die Druckmittelspeicher weisen eine progressive Federkennlinie auf. Die Steigung der Federkennlinien (Abhängigkeit der Achsfederrate von der Achslast) von Druckmittelspeichern mit großem Volumen ist geringer als die von Druckmittelspeichern mit kleinerem Volumen. Es ist von besonderem Vorteil, Druckmittelspeicher mit relativ geringer Steigung der Federkennlinie zu verwenden, so daß die Steigung der Federkennlinie der Achsfederung bei geringen Vorderachslasten von beispielsweise 10 kN im Bereich zwischen 0,003 $\frac{N/mm}{N}$ und 0,01 $\frac{N/mm}{N}$, vorzugsweise bei unge-

fähr 0,0075, liegt, während bei hohen Achslasten von beispielsweise 70 kN die Steigung der Federkennlinie zwischen 0,015 $\frac{N/mm}{N}$ und 0,035 $\frac{N/mm}{N}$, vorzugsweise bei ungefähr 0,025 $\frac{N/mm}{N}$, liegt. Hierbei ist die Achsfederrate in Newton pro Millimeter Federweg bezogen auf die Achslast angegeben. Z. B. kann die Federrate für eine Vorderachslast von beispielsweise 10 kN bei 100 bis 250 N/mm, vorzugsweise bei 180 N/mm, (relativ weiche Feder) und bei einer Achslast von 70 kN bei 1000 bis 1300 N/mm, vorzugsweise 1150 N/mm, (relativ harte Feder) liegen. Bei der Auslegung der Druckmittelspeicher kann auch berücksichtigt werden, daß für den Lastbereich im Frontladerbetrieb eine ausreichend steife Federcharakteristik gegeben ist, um das Fahrzeug bei ausgehobener Last gegen Nicken stabil zu halten. Auch in dem Lastbereich des Pflügens sollte die Federrate nicht zu gering sein.

In vorteilhafter Weise enthält die Ventileinrichtung eine Druckregelung, die den Druck auf der Ringraumseite des wenigstens einen Hydraulikzylinder auf einen mittleren, im wesentlichen konstanten Wert einstellt. Hierdurch spannt der Druck auf der Ringraumseite das Federsystem vor und legt den Arbeitsbereich für den Druckraumdruckspeicher fest. Auf der Druckraumseite lastet die auf der Achse ruhende Gewichtskraft sowie der Vorspanndruck der Ringraumseite. Dies ermöglicht es, einen großen Lastbereich durch das Federsystem abzudecken, ohne daß zwischen unterschiedlich vorgespannten Federspeichern (siehe beipielsweise DE 41 38 208) umgeschaltet werden muß. Die Vorspannung der Ringraumseite schützt den Druckraumdruckspeicher vor Unter- oder Überlastung.

Desweiteren ist die Ventileinrichtung ausgelegt, um den Druck auf der Druckraumseite des wenigstens einen Hydraulikzylinders in Abhängigkeit einer sich ändernden auf der Achse lastenden Auflast nachzustellen. Dabei kann die lastabhängige Lage der Achse durch Signale eines Lagesensors festgestellt werden, der eine lastbedingte Abstandsänderung zwischen Achskörper und Fahrzeugrumpf erfaßt. Grundsätzlich ist die Niveaueinstellung oder -regelung unter allen Betriebsbedingungen aktiv und stellt eine vorgebbare mittlere Höhenlage des Fahrzeugrumpfes über dem Achskörper ein. Durch die Niveauregelung wird die Höhenlage unabhängig von statischen Belastungsänderungen beibehalten. Die mittlere Höhenlage läßt sich durch ein Kalibrierverfahren festlegen, bei dem die Ventileinrichtung angesteuert wird, um den gesamten Hubbereich der Hydraulikzylinder zu durchfahren. Aus den Endpunkten (oberer und unterer Anschlag) der Hubbewegung wird dann die mittlere Höhenlage ermittelt und abgespeichert.

Gemäß einer bevorzugten Ausgestaltung der Erfindung enthält die Ventileinrichtung wenigstens ein elektromagnetisch ansteuerbares Niveauregelventil, welches dem Nachfüllen oder Ablassen von Hydraulikflüssigkeit in den Druckraum und/oder Ringraum dient. Das Niveauregelventil wird durch einen elektrischen Steuerkreis aufgrund von Signalen eines Lagesensors angesteuert. Dabei werden aus den Lagesensorsignalen laufend erste Mittelwerte über Zeitintervalle von 2 bis 10 sec, vorzugsweise von ungefähr 6 sec, gebildet. Das konkrete Zeitintervall wird in Abhängigkeit der Trägheit des gesamten Regelkreises sowie der Schwingungsperioden der niedrigsten Eigenfrequenz des Fahrzeugs festgelegt. Es sollte wenigstens 5 Schwingungsperioden betragen. Steuersignale zum Nachfüllen oder Ablassen von Hydraulikflüssigkeit werden nur dann an das Niveauregelventil abgegeben, wenn der erste Mittelwert einen vorgebbaren Toleranzbereich eines Sollwerts verläßt. DerToleranzbereich liegt bespielsweise innerhalb on $\pm$ 7,5 % des gesamten Federhubs (von z. B. 100 mm) beidseits des Sollwerts. Der Sollwert entspricht normalerweise dem mittleren Federhub. Damit erfolgt ein Niveauausgleich nicht schon aufgrund von Eigenschwingungen des Fahrzeugs, sondern nur, wenn sich die Last über längere Zeitabschnitte geändert hat.

Es ist desweiteren von Vorteil, aus den Lagesensorsignalen laufend zweite Mittelwerte über Zeitintervalle von 0,3 bis 2 sec, vorzugsweise von ungefähr 0,8 sec zu bilden. Sobald der zweite Mittelwert wieder im Toleranzbereich liegt, beendet das wenigstens eine Niveauregelventil den Nachfüll- oder Ablassvorgang. Die Zeitkonstante des zweiten Mittelwertes wird so gewählt, daß ein Überschwingen der Achslage über den Sollwert vermieden wird. Sie hängt insbesondere von der Pumpleistung und dem Volumen der Hydraulikzylinder und der Druckmittelspeicher ab.

Wenn der Lagesensormeßwert für einen längeren Zeitraum von beispielsweise 10 bis 30 sec außerhalb des Toleranzbereichs liegt, wird ein Systemfehler angenommen. Dann wird die Niveauregelung abgeschaltet und eine optische und/oder akustische Fehlermeldung ausgegeben. Die Federung bleibt jedoch weiter aktiv. Hierdurch wird eine Übersteuerung der Regelung und ein Überschwingen vermieden.

Es ist von Vorteil, wenn bei Unterschreiten einer vorgebbaren Fahrzeuggeschwindigkeit (z. B. 1,5 km/h) oder bei Auftreten eines Fehlers in den elektrischen oder hydraulischen Komponenten eine Niveauregelung unterbunden wird, um ein für die Bedienungsperson unerwartetes Verhalten (Nickausgleich) der Achsfederung zu vermeiden. Wird beispielsweise bei stehendem Fahrzeug dessen Belastung durch Anbau oder Abbau eines Gerätes verändert, so neigt sich das Fahrzeug. Dies soll im Stand nicht ausgeglichen werden. Die Niveauregelung kann durch Schließen der Ventile der Ventileinrichtung blockiert werden. Hierbei bleibt die Federung jedoch wirksam, da die Hydraulikverbindungen zwischen den Druckräumen und dem Druckraumdruckspeicher sowie zwischen den Ringräumen und dem Ringraumdruckspeicher offen bleiben, so daß ein Flüssigkeitsaustausch stattfinden kann.

Die Dämpfung des Federungssystems ergibt sich aus den verwendeten Bauelementen und Verbindungsleitungen. Es kann jedoch wünschenswert sein, die Dämpfungsrate jeweils auf die gegebenen unterschiedlichen Betriebsbedingungen anzupassen. Eine vorteilhafte Ausgestaltung der Erfindung sieht daher vor, zwischen den Druckräumen der Hydraulikzylinder und dem zugehörigen Druckmittelspeicher ein einstellbares Proportionalventil anzuordnen, durch das sich die Dämpfungsrate des Federsystems einstellen oder regeln läßt. Das Fehlverhalten des Fahrzeugs läßt sich aus den Amplituden und Frequenzen des Lagesensorsignals ablesen. Hohe Amplituden und niedrige Frequenzen lassen auf eine relativ weiche Federung des Schleppers schließen. Durch Verengen des Durchtrittskanals in dem Proportionalventil läßt sich die Federsteifigkeit erhöhen. Es ist auch möglich, entsprechende Rückschlüsse aus Druckmessungen an den Druckmittelspeicher oder den Druckräumen der Hydraulikzylinder zu gewinnen.

Das erfindungsgemäße Achsfederungssystem eignet sich besonders für eine angetriebene, pendelnd gelagerte, starre Vorderachse, auf der sich der Fahrzeugaufbau über zwei in etwa symmetrisch beidseits der Pendelachse angeordnete, im wesentlichen vertikal ausgerichtete Hydraulikzylinder abstützt.

Es hat sich gezeigt, daß für eine Verbesserung der Dynamik des Vorderachsfederungssystems die Anlenkung des Achskörpers an dem Fahrzeugaufbau nicht reaktionsfrei erfolgen soll. Daher ist es von besonderem Vorteil, die horizontalen Kräfte in Fahrzeuglängsrichtung durch einen Zug- oder Schublenker abzufangen, der starr an der Starrachse befestigt und über ein Gelenk an dem Fahrzeugaufbau angelenkt ist. Das Gelenk ist vorzugsweise ein Kugelgelenk. Der Schublenker sollte möglichst lang sein. Insbesondere ist es von Vorteil, wenn der Schublenker eine Länge aufweist, die größer ist als der wirksame Reifendurchmesser der Vorderräder, von beispielsweise 800 mm.

Die Länge des Zug- oder Schublenkers wird vorzugsweise so bemessen, daß durch die Federung das Bremsmoment weitgehenst, wenigstens jedoch zu 50%, kompensiert wird. Bei einem zu kurzen Zug- oder Schublenker wird das Bremsmoment überkompensiert und das Fahrzeug bäumt sich auf. Dies wird als nachteilig angesehen. Vielmehr sollte das Fahrzeug beim Beschleunigen und Bremsen möglichst seine horizontale Lage beibehalten. Dies ist dann der Fall, wenn eine Kompensation zwischen Bremseffekt (Eintauchen) und Zugkraftänderung (Aufbäumen) erfolgt. Bei einem zu kurzen Zug- oder Schublenker können lastbedingte Rückstellmomente auftreten, die zu unerwünschten Zugkraftschwankungen führen, bei denen das Fahrzeug nicht ruhig bleibt.

Es hat sich als vorteilhaft herausgestellt, wenn die Anlenkstelle zwischen Zug- oder Schublenker und Fahrzeugaufbau in der Nähe der durch den Fahrzeugschwerpunkt definierten vertikalen Querebene liegt und/oder wenn die Hydraulikzylinder vor der Mittellinie (Drehachse der Vorderräder) der Starrachse angeordnet sind. Die Lenkerlänge kann vorzugsweise 40% des Achsabstandes betragen. Der Zug- oder Schublenker ist vorzugsweise so ausgestaltet, daß er die in Fahrzeuglängsrichtung verlaufende Antriebsachse wenigstens teilweise abdeckt und gegen Schmutz und Beschädigungen schützt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1    die schematische Darstellung eines erfindungsgemäßen Vorderachsfederungssystems,

Fig. 2    einen Hydraulikkreis für das erfindungsgemäße Vorderachsfederungssystem und

Fig. 3    ein Diagramm der Achsfederrate in Abhängigkeit der Achslast.

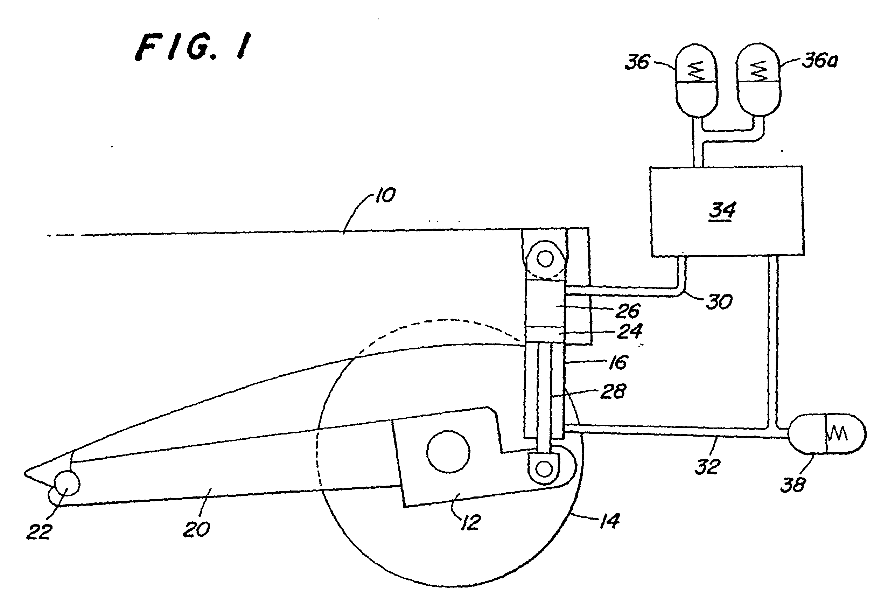

In Fig. 1 ist ein Teilausschnitt eines den Fahrzeugaufbau bildenden Rahmens 10, der Vorderachskörper 12 und ein Vorderrad 14 eines nicht näher dargestellten Ackerschleppers schematisch angedeutet. Der Vorderachskörper 12 enthält eine mittlere Pendelachse, was in Fig. 1 jedoch nicht dargestellt ist. Einzelheiten hierzu können der am 19.10.1996 eingereichten, noch nicht veröffentlichten deutschen Patentanmeldung 196 43 263.4 der Anmelderin entnommen werden.

Zwischen dem Rahmen 10 und dem Vorderachskörper 12 sind zwei Hydraulikzylinder 16, 17 im wesentlichen symmetrisch zur Pendelachse angeordnet, von denen in Fig. 1 einer sichtbar ist. Die Hydraulikzylinder 16, 17 sind mit jeweils einem Ende gelenkig an dem Rahmen 10 und mit dem jeweils anderen Ende gelenkig an dem Vorderachskörper 12 befestigt. Die Hydraulikzylinder 16, 17 sind vor der Mittellinie des Vorderachskörpers 12 an dieser angelenkt.

Der Vorderachskörper 12 stützt sich über einen Zug- oder Schublenker 20 in Fahrzeuglängsrichtung an dem Rahmen 10 ab. Das vordere Ende des Schublenkers 20 ist starr an dem Vorderachskörper 12 befestigt. Sein hinteres Ende steht über ein Kugelgelenk 22 mit dem Rahmen 10 in Verbindung. Das Kugelgelenk 22 ermöglicht es dem Vorderachskörper 12 nach oben und unten auszuschwingen. Eine seitliche Bewegung des Vorderachskörpers 12 wird durch einen nicht dargestellten Panhardstab begrenzt. Innerhalb des Schublenkers 20 verläuft die nicht näher dargestellte Antriebswelle für die Vorderachse.

Bei einem Radstand eines Ackerschleppers von 2650 mm kann die Länge des Schubrohrs in etwa 1000 mm betagen und die Anlenkpunkte der Hydraulikzylinder 16, 17 an dem Vorderachskörper 12 können in etwa 200 mm vor der Mittellinie des Vorderachskörpers 12 liegen.

Die Hydraulikzylinder 16, 17 weisen je ein Zylindergehäuse auf, in dem ein Kolben 24 längsverschiebbar geführt ist. Der Kolben 24 unterteilt das Zylindergehäuse in einen oberen Druckraum 26, 27 und einen unteren Ringraum 28, 29. Die Druckräume 26, 27 und die Ringräume 28, 29 der beiden Hydraulikzylinder 16, 17 stehen über Hydraulikleitungen 30, 32 mit einer Ventileinrichtung 34, mit zwei Druckraumdruckspeichern 36, 36a und einem Ringraumspeicher 38 in Verbindung. Bei den Druckspeichern 36, 36a und 38 handelt es sich um Stickstoffgasdruckspeicher bekannter Bauart.

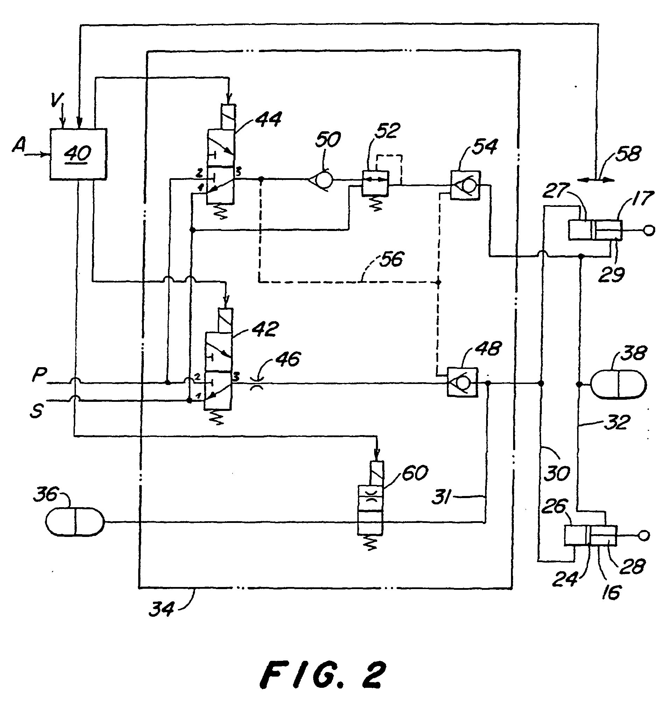

Näheres zum Hydraulikkreis und zu dessen elektrischer Steuerung wird im folgenden anhand der Fig. 2 beschrieben.

Die Druckräume 26, 27 der beiden Hydraulikzylinder 16, 17 sind über die Hydraulikleitung 30 miteinander und über eine weitere Hydraulikleitung 31 mit den beiden Druckraumdruckspeichern 36, 36a, von denen in Fig. 2 nur einer dargestellt ist, verbunden. Die Ringräume 28, 29 der beiden Hydraulikzylinder 16, 17 sind über die Hydraulikleitung 32 miteinander und mit dem Ringraumdruckspeicher 38 verbunden. Die Verbindungen zwischen den Druckräumen 26, 27 und den Druckraumdruckspeichern 36, 36a sowie zwischen den Ringräumen 28, 29 und dem Ringraumdruckspeicher 38 werden unter keinen Betriebsbedingungen vollständig gesperrt, so daß die Federung ständig wirksam bleibt.

Die Ventileinrichtung 34 kann aus einem Bauteil bestehen, in dem mehrere Ventile ausgebildet sind, von denen einige durch eine elektrische oder elektronische Steuereinheit 40 ansteuerbar sind.

Die Ventileinrichtung 34 enthält ein erstes und ein zweites Magnetventil 42, 44 mit je zwei Stellungen und je drei Hydraulikanschlüssen. Je ein erster Hydraulikanschluß ist an eine nicht näher dargestellte Hydraulikpumpe P und je ein zweiter Hydraulikanschluß ist an einen nicht näher dargestellten Hydrauliksammelbehälter S angeschlossen. Der dritte Hydraulikanschluß des ersten Hydraulikventils 42 steht über eine Drosselstelle 46 und ein erstes entsperrbares Rückschlagventil 48 mit der Hydraulikleitung 30 und den Druckräumen 26, 27 in Verbindung. Der dritte Hydraulikanschluß des zweiten Hydraulikventils 44 steht über ein Rückschlagventil 50, ein Druckregelventil 52 und ein zweites entsperrbares Rückschlagventil 54 mit der Hydraulikleitung 32 und den Ringräumen 28, 29 in Verbindung. Desweiteren werden die beiden entsperrbaren Rückschlagventile 48, 54 über Steuerleitungen 56 von dem am dritten Hydraulikanschluß des zweiten Steuerventils 44 anstehenden Druck gesteuert.

Die Steuereinheit 40 empfängt Signale A einer nicht dargestellten manuell betätigbaren Eingabeeinheit, durch die sich die Steuereinheit 40 programmieren und Parameter des Vorderachsfederungssystems einstellen lassen, sowie Signale V eines nicht dargestellten Fahrzeuggeschwindigkeitssensors. Ein Lagesensor 58 erfaßt die Höhenlage des Fahrzeugrumpfes 10 über dem Vorderachskörper 12 und gibt entsprechende Lagesignale an die Steuereinheit 40 ab. Die Steuereinheit 40 bildet aus den Lagesensorsignalen laufend Mittelwerte. Über- oder Unterschreiten die Mittelwerte einen sich um eine mittlere Höhenlage erstreckenden vorgebbaren Lagetoleranzbereich, so erfolgt ein Niveauausgleich.

Wenn der Fahrzeugrumpf 10 aufgrund von Laständerungen von einer vorgebbaren Niveaulage abweicht, gibt die Steuereinheit 40 elektrische Signale an die beiden als Niveauregelventile wirkenden Magnetventile 42, 44 ab, um diese gegebenenfalls aus der dargestellten Ruhestellung (Magnetventile sind stromlos), in der der jeweils dritte Hydraulikanschluß mit dem Sammelbehälter verbunden ist, in eine angeregte Stellung zu bringen, in der der jeweils dritte Hydraulikanschluß mit der Hydraulikpumpe verbunden ist. Fällt die Fahrzeuggeschwindigkeit unter einen vorgebbaren Wert ab, unterbleibt eine Ansteuerung der Magnetventile 42, 44, so daß diese geschlossen bleiben und keine Niveäuregelung erfolgt.

Stellt der Lagesensor 58 ein Anheben des Fahrzeugrumpfes 10 fest, so leitet die Steuereinheit 40 ein Abregeln ein, bei dem das erste Magnetventil 42 in der dargestellten stromlosen Stellung verharrt und das zweite Magnetventil 44 bestromt wird und seinen dritten Hydraulikanschluß mit der Hydraulikpumpe P verbindet. Der ansteigende Druck in den Steuerleitungen 56 öffnet die entsperrbaren Rückschlagventile 48, 54 und das Druckregelventil 52 stellt einen vorbestimmten Druck in der Hydraulikleitung 32 und den Ringräumen 28, 29 ein. Der Druck in den Druckräumen 26, 27 und dem zugehörigen Druckspeicher 36 wird über das Rückschlagventil 48 und das Magnetventil 42 zum Sammelbehälter so lange abgebaut, bis die mittlere Niveaulage durch den Lagesensor 58 gemeldet wird. Dann wird der dritte Hydraulikanschluß des Magnetventils 44 mit dem Sammelbehälter S verbunden, die Steuerleitungen 56 werden drucklos und die Rückschlagventile 48, 54 schließen, so daß ein weiterer Druckmittelabfluß aus den Druckräumen 26, 27 unterbunden wird.

Stellt der Lagesensor 58 ein Absinken des Fahrzeugrumpfes fest, so leitet die Steuereinheit 40 ein Aufregeln ein, bei dem beide Magnetventile 42, 44 erregt und ihre dritten Hydraulikanschlüsse mit der Hydraulikpumpe P verbunden werden. Der ansteigende Druck in den Steuerleitungen 56 öffnet die entsperrbaren Rückschlagventile 48, 54 und das Druckregelventil 52 stellt einen vorbestimmten Druck in der Hydraulikleitung 32 und den Ringräumen 28, 29 ein. Der Druck in den Druckräumen 26, 27 und dem zugehörigen Druckraumdruckspeicher 36 wird über das erste Magnetventil 42 und das Rückschlagventil 48 so lange aufgebaut, bis die mittlere Niveaulage durch den Lagesensor 58 gemeldet wird. Dann werden die dritten Hydraulikanschlüsse der Magentventile 42, 44 mit dem Sammelbehälter S verbunden, die Steuerleitungen 56 werden drucklos und die Rückschlagventile 48, 54 schließen, so daß ein weiterer Druckmittelzufluß zu den Druckräumen 26, 27 unterbunden wird.

In der Hydraulikleitung 31 kann wahlweise, wie in Fig. 2 gezeigt, ein durch die Steuereinheit 40 ansteuerbares Proportionalventil 60 eingefügt werden, über das sich die Dämpfung der Vorderachsfederung regulieren läßt.

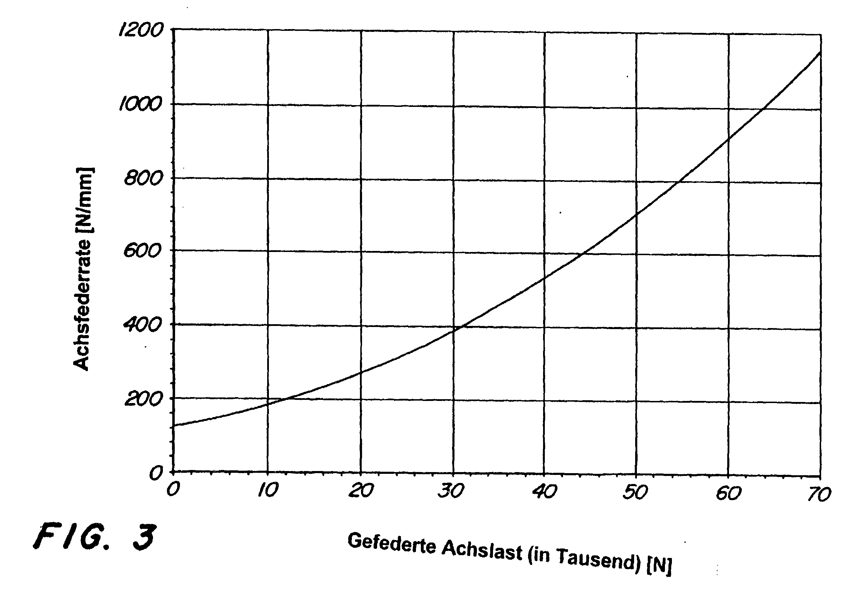

In Fig. 3 ist die theoretische Achsfederrate in N/mm des Vorderachsfederungssystems über der gefederten Achslast in N beispielhaft dargestellt, die für einen 96 KW-Ackerschlepper mit einem Eigengewicht von ungefähr 5400 kg geeignet ist und folgende Kennwerte aufweist:

| | |
|---|---|
| Zylinderdurchmesser | 50 mm |
| Kolbenstangendurchmesser | 38 mm |
| Übersetzungsverhältnis (Rad/Zyl.) (Hebellänge Rad/Hebellänge Zylinder) | 0,868 |
| Druckraum-Speichervolumen / Achse | 2800 cm$^3$ |
| Gasvorspannung | 32 bar |
| Ringraum-Speichervolumen / Achse | 1000 cm$^3$ |
| Gasvorspannung | 33 bar |
| Polytropenexponent | 1,3 |
| konstanter Druck im Ringraum | 92 bar |
| max. Ausfederung der Achse | -52 mm |
| max. Einfederung der Achse | 52 mm |

Die Federrate ist bei einer Achslast von 12000 N (unbelastete Vorderachse) ungefähr 200 N/mm und bei einer Achlast von 64000 N

(mit Frontgewichten und Frontlader belastete Vorderachse) ungefähr 1000 N/mm.

Die Steigung der dargestellten Federkennlinie liegt für kleine Achslasten von 10000 N bei ungefähr 0,0075 $\frac{N/mm}{N}$ und für große Achslasten von 70000 N bei ungefähr 0,024 $\frac{N/mm}{N}$. Damit weist die Federkennlinie eine vergleichsweise geringe Steigung auf. Die Steigung läßt sich weiter reduzieren, in dem der Druck in dem Ringraum nicht konstant gehalten, sondern in Abhängigkeit der Last variiert wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die im Anspruch 1 definierte Erfindung fallen.

**Patentansprüche**

1. Hydropneumatisches Achsfederungssystem für die angetriebene Achse eines landwirtschaftlichen Arbeitsfahrzeugs, insbesondere für die Vorderachse eines Ackerschleppers, mit wenigstens einem zwischen Fahrzeugaufbau (10) und Achskörper (12) angeordneten Hydraulikzylinder (16, 17), dessen Ringraum (28, 29) und dessen Druckraum (26, 27) je mit wenigstens einem Druckmittelspeicher (36, 36a, 38) in Verbindung stehen, und mit einer durch eine Hydraulikpumpe gespeisten Ventileinrichtung (34) zur Niveaueinstellung, die den Druck der Druckmittelspeicher (36, 36a, 38) in Abhängigkeit der Belastung des Achskörpers (12) einstellt, **dadurch gekennzeichnet, daß** die mechanischen und hydropneumatischen Komponenten für eine Federung unter maximaler Belastung des Achskörpers (12) ausgelegt sind und daß die Ventileinrichtung (34) derart ausgebildet ist und angesteuert wird, daß die Druckmittelspeicher (36, 36a, 38) bei allen Betriebsbedingungen des Fahrzeugs mit den zugehörigen Druckräumen (26, 27) in Verbindung stehen so daß die Federung unter keinen Betriebsbedingungen vollständig sperrbar ist, wobei ein ausreichender Druck aufrechterhalten wird, um unter allen Last- und Fahrbedingungen des Fahrzeugs ein Federn des Achskörpers (12) zu ermöglichen.

2. Achsfederungssystem nach Anspruch 1, **dadurch gekennzeichnet, daß** zwei Hydraulikzylinder (16, 17) vorgesehen sind, deren Druckräume (26, 27) oben liegen und deren Kolbenstangen mit dem Achskörper (12) verbunden sind, und daß die Druckräume (26, 27) untereinander und mit einem oder mehreren parallel geschalteten Druckraumdruckspeichern (36, 36a) sowie die Ringräume (28, 29) untereinander und mit einem oder mehreren parallel geschalteten Ringraumdruckspeichern (38) unmittelbar in Verbindung stehen.

3. Achsfederungssystem nach Anspruch 1 oder 2, **dadurch gekennzeichnet, daß** die Ventileinrichtung (34) wenigstens ein elektromagnetisch ansteuerbares einerseits mit der Hydraulikpumpe und einem Vorratsbehälter und andererseits mit dem Ringraum (28, 29) und dem Druckraum (26, 27) in Verbindung stehendes Niveauregelventil (42, 44) enthält, welches aufgrund von Signalen eines Lagesensors (58) ansteuerbar ist, und daß zwischen dem Niveauregelventil (42, 44) und dem Ringraum (28, 29) sowie zwischen dem Niveauregelventil (42, 44) und dem Druckraum (26, 27) des wenigstens einen Hydraulikzylinders (16, 17) je ein entsperrbares Rückschlagventil (48, 54) angeordnet ist, welches gegen einen Druckmittelrückfluß aus dem Ringraum (28, 29) bzw. dem Druckraum (26, 27) sperrt.

**4.** Achsfederungssystem nach einem der Ansprüche 1 bis 3, **dadurch gekennzeichnet, daß** das Gesamtnennvolumen des oder der Druckraumdruckspeicher (36, 36a) wenigstens doppelt so groß ist, wie das Gesamtnennvolumen des oder der Ringraumspeicher (38).

**5.** Vorderachsfederungssystem nach einem der Ansprüche 1 bis 4, **dadurch gekennzeichnet, daß** die Druckmittelspeicher (36, 36a, 38) derart ausgelegt sind, daß die Steigung der Federkennlinie der Vorderachsfederung für kleine Achslasten zwischen 0,003 $\frac{N/mm}{N}$ und 0,01 $\frac{N/mm}{N}$, vorzugsweise bei ungefähr 0,0075 $\frac{N/mm}{N}$, und für große Achslasten zwischen 0,015 $\frac{N/mm}{N}$ und 0,035 $\frac{N/mm}{N}$, vorzugsweise bei ungefähr 0,025 $\frac{N/mm}{N}$, liegt.

**6.** Achsfederungssystem nach einem der Ansprüche 1 bis 5, **dadurch gekennzeichnet, daß** der Druck auf der Druckraumseite selbsttätig durch die jeweilige Auflast eingestellt wird, und die Auslegung von Hydraulikzylinder (16, 17), Druckmittelspeichern (36, 36a, 38) und Ventileinrichtung (34) derart erfolgt, daß sich bei Achslasten von ungefähr 10 kN eine Federrate von 100 bis 250 N/mm, vorzugsweise von ungefähr 180 N/mm und bei Achslasten von 70 kN eine Federraten von 1000 N/mm bis 1300 N/mm, vorzugsweise von ungefähr 1150 N/mm einstellt.

**7.** Achsfederungssystem nach einem der Ansprüche 1 bis 6, **dadurch gekennzeichnet, daß** die Ventileinrichtung (34) eine Druckregelung (52) enthält, die den Druck auf der Ringraumseite des wenigstens einen Hydraulikzylinders (16, 17) auf einen mittleren, im wesentlichen konstanten Wert einstellt, und daß die Ventileinrichtung (34) den Druck auf der Druckraumseite des wenigstens einen Hydraulikzylinders (16, 17) in Abhängigkeit einer sich ändernden Achslast nachstellt.

**8.** Achsfederungssystem nach Anspruch 7, **dadurch gekennzeichnet, daß** die Niveaulage des Achskörpers (12) laufend erfaßt und über ein vorgebbares Zeitintervall gemittelt wird und daß eine Drucknachstellung nur dann erfolgt, wenn der Mittelwert der Niveaulage eine vorgebbare Toleranzbreite um einen Sollwert über- oder unterschreitet.

**9.** Achsfederungssystem nach einem der Ansprüche 1 bis 8, **dadurch gekennzeichnet, daß** die Ventileinrichtung (34) wenigstens ein elektromagnetisch ansteuerbares Niveauregelventil (42, 44) enthält, welches dem Füllen oder Ablassen von Hydraulikflüssigkeit in den Druckraum (26, 27) und/oder Ringraum (28, 29) dient und welches durch einen elektrischen Steuerkreis (40) aufgrund von Signalen eines Lagesensors (58) derart ansteuerbar ist, daß aus den Lagesensorsignalen laufend erste Mittelwerte über Zeitintervalle von 2 bis 10 sec, vorzugsweise von ungefähr 6 sec, gebildet werden und daß an das wenigstens eine Niveauregelventil (42, 44) Steuersignale zum Nachfüllen oder Ablassen abgegeben werden, wenn der erste Mittelwert einen vorgebbaren Toleranzbereich um einen Sollwert verläßt.

**10.** Achsfederungssystem nach Anspruch 9, **dadurch gekennzeichnet, daß** aus den Lagesensorsignalen laufend zweite Mittelwerte über Zeitintervalle von 0,3 bis 2 sec, vorzugsweise von ungefähr 0,8 sec, gebildet werden und daß an das wenigstens eine Niveauregelventil (42, 44) Steuersignale zum Beenden des Nachfüll- oder Ablassvorganges abgegeben werden, wenn der zweite Mittelwert innerhalb des Toleranzbereichs liegt.

**11.** Achsfederungssystem nach einem der Ansprüche 1 bis 10, **dadurch gekennzeichnet, daß** ein Sensor zur direkten oder indirekten Erfassung der Fahrzeuggeschwindigkeit vorgesehen ist und daß die Niveauregelung bei Unterschreiten einer vorgebbaren Fahrgeschwindigkeit abgeschaltet wird.

**12.** Achsfederungssystem nach einem der Ansprüche 1 bis 11, **dadurch gekennzeichnet, daß** die Ventileinrichtung (34) zur Niveauregelung einen elektrischen Steuerkreis (40) enthält, durch den elektrische und hydraulische Komponenten des Achsfederungssystems überwacht werden, und daß bei Ausfall der Stromversorgung oder bei Auftreten von Fehlern im Achsfederungssystem keine Niveauregelung erfolgt, die Achsfederung jedoch aufrechterhalten bleibt.

**13.** Achsfederungssystem nach einem der Ansprüche 1 bis 12, **dadurch gekennzeichnet, daß** zwischen dem Druckraum (26, 27) des wenigstens einen Hydraulikzylinders (16, 17) und dem zugehörigen Druckmittelspeicher (36, 36a) ein einstellbares Proportionalventil (60) angeordnet ist, durch das sich die Dämpfungsrate des Federsystems einstellen und/oder regeln läßt.

**14.** Achsfederungssystem nach einem der Ansprüche 1 bis 13, **dadurch gekennzeichnet, daß** die Achse eine angetriebene, pendelnd gelagerte, starre Vorderachse (12) ist, auf der sich der Fahrzeugaufbau (10) über zwei in etwa symmetrisch beidseits der Pendelachse angeordnete, im wesentlichen vertikal ausgerichtete Hydraulikzylinder (16, 17) abstützt, und daß ein in Fahrzeuglängsrichtung verlaufender Zug- oder Schublenker (20) vorgesehen ist, der starr an der Vorderachse (12) befestigt und über ein Gelenk (22) an dem Fahrzeugaufbau (10) angelenkt ist.

15. Achsfederungssystem nach einem der Ansprüche 1 bis 14, **dadurch gekennzeichnet, daß** der Zug- oder Schublenker (20) eine Länge aufweist, die größer als der wirksame Reifendurchmesser der Räder (14), insbesondere der Vorderräder, ist.

16. Achsfederungssystem nach Anspruch 14 oder 15, **dadurch gekennzeichnet, daß** der Anlenkpunkt der Hydraulikzylinder (16, 17) an dem Vorderachskörper (12) in einem Abstand vor der Mittellinie des Vorderachskörpers liegt, der 1/3 bis 1/10, vorzugsweise in etwa 1/5, der Länge des Zug- oder Schublenkers beträgt.

17. Achsfederungssystem nach einem der Ansprüche 1 bis 16, **dadurch gekennzeichnet, daß** die Länge des Zug- oder Schublenkers (20) so bemessen ist, daß durch die Federung das Bremsmoment weitgehens, wenigstens jedoch zu 50%, kompensiert wird.

18. Achsfederungssystem nach einem der Ansprüche 1 bis 17, **dadurch gekennzeichnet, daß** die Anlenkstelle des Zugoder Schublenkers (20) in etwa in der durch den Fahrzeugschwerpunkt definierten vertikalen Querebene liegt.

19. Achsfederungssystem nach einem der Ansprüche 1 bis 18, **dadurch gekennzeichnet, daß** der Zug- oder Schublenker (20) die Antriebswelle der Achse wenigstens teilweise einschließt und schützt.

## Claims

1. A hydro-pneumatic axle spring suspension system for the driven axle of an agricultural work vehicle, especially for the front axle of an agricultural tractor, with at least one hydraulic cylinder (16, 17) which is arranged between the vehicle body (10) and the axle body (12) and whose annular chamber (28, 29) and whose pressure chamber (26, 27) are each in communication with at least one pressure medium accumulator (36, 36a, 38), and with a valve arrangement (34) supplied by a hydraulic pump for level adjustment, which sets the pressure of the pressure medium accumulators (36, 36a, 38) in dependence on the loading on the axle body (12), **characterized in that** the mechanical and hydro-pneumatic components are designed for springing under maximum loading on the axle body (12) and **in that** the valve arrangement (34) is so formed and controlled that the pressure medium accumulators (36, 36a, 38) are in communication with the corresponding pressure chambers (26, 27) under all operating conditions of the vehicle, so that the springing cannot be completely blocked under any operating conditions, whereby a sufficient pressure is maintained to make springing of the axle body (12) possible under all load and driving conditions of the vehicle.

2. An axle spring suspension system according to claim 1, **characterized in that** two hydraulic cylinders (16, 17) are provided, whose pressure chambers (26, 27) lie above and whose piston rods are connected to the axle body (12), and **in that** the pressure chambers (26, 27) are directly connected together and to one or more pressure chamber pressure accumulators (36, 36a) connected in parallel and the annular chambers (28, 29) are directly connected together and to one or more annular chamber pressure accumulators (38) connected in parallel.

3. An axle spring suspension system according to claim 1 or 2, **characterized in that** the valve arrangement (34) includes at least one electromagnetically controllable level regulating valve (42, 44) which is in communication on one side with the hydraulic pump and a reservoir and on the other side with the annular chamber (28, 29) and the pressure chamber (26, 27) and can be controlled on the basis of signals of a position sensor (58), and **in that** a check valve (48, 54) which can be unblocked is arranged in each case between the level regulating valve (42, 44) and the annular chamber (28, 29) and between the level regulating valve (42, 44) and the pressure chamber (26, 27) of the at least one hydraulic cylinder (16, 17) and blocks return flow of pressure medium out of the respective annular chamber (28, 29) or pressure chamber (26, 27).

4. An axle spring suspension system according to any of claims 1 to 3, **characterized in that** the total nominal volume of the pressure chamber pressure accumulator(s) (36, 36a) is at least twice as large as the total nominal volume of the annular chamber accumulator(s).

5. A front axle spring suspension system according to any of claims 1 to 4, **characterized in that** the pressure medium accumulators (36, 36a, 38) are so designed that the rise of the spring characteristic of the front axle springing lies between 0.003(N/mm)/N and 0.1(N/mm)/N for small axle loads, preferably at approximately 0.0075(N/mm)/N, and between 0.015(N/mm)/N and 0.035(N/mm)/N for large axle loads, preferably at approximately 0.025(N/mm)/N.

6. An axle spring suspension system according to any of claims 1 to 5, **characterized in that** the pressure on the pressure chamber side is automatically adjusted by the current applied load and the design of the hydraulic cylinders (16, 17), pressure medium accumulators (36, 36a, 38) and valve arrangement (34) is made such that a spring rate of 100 to 250 N/mm, preferably of approximately 180 N/mm is set for axle loads of approximately 10 kN and that a spring rate of 1000 N/mm to 1300 N/mm, preferably of approximately 1150 N/mm is set for axle loads of 70 kN.

7. An axle spring suspension system according to any of claims 1 to 6, **characterized in that** the valve arrangement (34) comprises a pressure regulator (52) which sets the pressure on the annular chamber side of the at least one hydraulic cylinder (16, 17) to a mean, substantially constant value and **in that** the valve arrangement (34) readjusts the pressure on the pressure chamber side of the at least one hydraulic cylinder (16, 17) in dependence on a changing axle load.

8. An axle spring suspension system according to claim 7, **characterized in that** the level position of the axle body (12) is continuously detected and determined over a predeterminable time interval and **in that** a pressure readjustment is only effected when the mean value of the level position exceeds or falls below a predeterminable tolerance range about a set-point value.

9. An axle spring suspension system according to any of claims 1 to 8, **characterized in that** the valve arrangement (34) includes at least one electromagnetically controllable level regulating valve (42, 44), which serves for filling or draining hydraulic fluid in the pressure chamber (26, 27) and/or annular chamber (28, 29) and which is controllable by an electrical control circuit on the basis of signals of a position sensor (58) in such a way that first mean values are formed continuously from the position sensor signals over time intervals of 2 to 10 sec., preferably of approximately 6 sec., and **in that** control signals are issued to the at least one lever regulating valve (42, 44) for filling or draining when the first mean value departs from a predeterminable tolerance range about a set-point value.

10. An axle spring suspension system according to claim 9, **characterized in that** second mean values are formed continuously from the position sensor signals over time intervals of 0.3 to 2 sec., preferably of approximately 0.8 sec., and **in that** control signals for terminating the filling or draining operation are issued to the at least one load regulation valve (42, 44) when the second mean value lies within the tolerance range.

11. An axle spring suspension system according to any of claims 1 to 10, **characterized in that** a sensor is provided for direct or indirect detection of the vehicle speed and **in that** the level regulation is switched off on falling below a predeterminable vehicle speed.

12. An axle spring suspension system according to any of claims 1 to 11, **characterized in that** the valve arrangement (34) for the level regulation includes an electrical control circuit (40) through which electrical and hydraulic components of the axle spring suspension system are monitored and **in that** no level regulation is effected, although the axle springing continues to be maintained, on failure of the current supply or occurrence of errors in the axle spring suspension system.

13. An axle spring suspension system according to any of claims 1 to 12, **characterized in that** an adjustable proportional valve (60) is arranged between the pressure chamber (26, 27) of the at least one hydraulic cylinder (16, 17) and the associated pressure medium accumulator, through which the damping rate of the spring system can be adjusted and/or regulated.

14. An axle spring suspension system according to any of claims 1 to 13, **characterized in that** the axle is a driven, floating, rigid front axle (12), on which the vehicle body (10) is supported approximately symmetrically on the two sides of the floating axis by substantially vertically aligned hydraulic cylinders (16, 17), and **in that** a draught or thrust link (20) running in the vehicle longitudinal direction is provided, is rigidly fixed to the front axle (12) and is linked to the vehicle body (10) by a joint (22).

15. An axle spring suspension system according to any of claims 1 to 14, **characterized in that** the draught or thrust link (2) has a length which is greater than the effective tyre diameter of the wheels (14), in particular of the front wheels.

16. An axle spring suspension system according to claim 14 or 15, **characterized in that** the point of attachment of the hydraulic cylinders (16, 17) to the front axle body (12) lies at a distance in front of the centre line of the front axle body which amounts to 1/3 to 1/10, preferably about 1/5 of the length of the draught or thrust link.

17. An axle spring suspension system according to any of claims 1 to 16, **characterized in that** the length of the draught or thrust link (20) is made such that the brake moment is largely compensated, in any case up to 50%.

18. An axle spring suspension system according to any of claims 1 to 17, **characterized in that** the point of attachment of the draught or thrust link (20) lies approximately in the vertical transverse plane defined by the vehicle centre of gravity.

19. An axle spring suspension system according to any of claims 1 to 18, **characterized in that** the draught or thrust link (20) at least partially encloses and protects the drive shaft of the axle.


**Revendications**

1. Ressort d'essieu hydropneumatique pour l'essieu entraîné d'un véhicule de travail agricole, notamment pour l'essieu avant d'un tracteur agricole, comprenant au moins un vérin hydraulique (16, 17) disposé entre la structure de véhicule (10) et le corps d'essieu (12) et dont l'espace annulaire (28, 29) et l'espace sous pression (26, 27) sont respectivement en communication avec au moins un accumulateur de fluide sous pression (36, 36a, 38), et comprenant un dispositif de soupape (34) alimenté par une pompe hydraulique pour régler le niveau, qui règle la pression des accumulateurs de fluide sous pression (36, 36a, 38) en fonction de la sollicitation du corps d'essieu (12), **caractérisé en ce que** les composants mécaniques et hydropneumatiques sont conçus pour un amortissement sous sollicitation maximale du corps d'essieu (12), et **en ce que** le dispositif de soupape (34) est configuré et commandé de telle sorte que les accumulateurs de fluide sous pression (36, 36a, 38), sous toutes les conditions de fonctionnement du véhicule, sont en communication avec les espaces sous pression (26, 27) associés, de manière à ce que l'amortissement ne peut être bloqué complètement sous aucune condition de fonctionnement, une pression suffisante étant maintenue pour permettre un amortissement du corps d'essieu (12) sous toutes les conditions de sollicitation et de conduite.

2. Ressort d'essieu selon la revendication 1, **caractérisé en ce qu'**il est prévu deux vérins hydrauliques (16, 17) dont les espaces sous pression (26, 27) sont situés en haut et dont les tiges de piston sont reliées avec le corps d'essieu (12) et **en ce que** les espaces sous pression (26, 27) sont en relation directement l'un avec l'autre et avec un ou plusieurs accumulateurs sous pression d'espaces sous pression (36, 36a) montés en parallèle et que les espaces annulaires (28, 29) le sont l'un avec l'autre et avec un ou plusieurs accumulateurs sous pression d'espaces annulaires (38) montés en parallèle.

3. Ressort d'essieu selon la revendication 1 ou 2, **caractérisé en ce que** le dispositif de soupape (34) comporte au moins une vanne de régulation de niveau (42, 44) à commande électromagnétique qui est en relation d'une part avec la pompe hydraulique et un réservoir de stockage et d'autre part avec l'espace annulaire (28, 29) et l'espace sous pression (26, 27), laquelle est commandée en raison de signaux d'un capteur de position (58), et **en ce qu'**il est prévu, entre la vanne de régulation de niveau (42,44) et l'espace annulaire (28, 29) ainsi qu'entre la vanne de régulation de niveau (42,44) et l'espace sous pression (26, 27) du, au moins un, vérin hydraulique (16, 17), respectivement un clapet antiretour (48,0 54) déverrouillable, qui bloque contre un reflux de fluide sous pression en provenance de l'espace annulaire (28, 29) ou de l'espace sous pression (26, 27).

4. Ressort d'essieu selon l'une des revendications 1 à 3, **caractérisé en ce que** le volume nominal total du ou des accumulateurs sous pression d'espaces sous pression (36, 36a) est au moins le double du volume nominal total du ou des accumulateurs d'espaces annulaires (38).

5. Ressort d'essieu selon l'une des revendications 1 à 4, **caractérisé en ce que** les accumulateurs sous pression d'espaces sous pression (36, 36a, 38) sont conçus de manière que la pente de la courbe caractéristique de l'élasticité du ressort d'essieu est, pour les faibles charges sur essieu, entre 0,003 et 0,01, de préférence approximativement 0,0075, et pour les charges élevées sur essieu, entre 0,015 et 0,035, de préférence approximativement 0,025.

**6.** Ressort d'essieu selon l'une des revendications 1 à 5, **caractérisé en ce que** la pression du côté espaces sous pression se règle automatiquement par la charge respective et la conception des vérins hydrauliques (16,17), des accumulateurs de fluide sous pression (36, 36a, 38) et du dispositif de soupape (34) est réalisée de manière qu'à des charges sur essieu d'approximativement 10 kN, un taux d'élasticité de 100 à 250 N/mm, de préférence d'approximativement 180 N/mm et, à des charges sur essieu de 70 kN, un taux d'élasticité de 1000 N/mm à 1300 N/mm, de préférence d'approximativement 1150 N/mm se règle.

**7.** Ressort d'essieu selon l'une des revendications 1 à 6, **caractérisé en ce que** le dispositif de soupape (34) contient un système de régulation de pression (52) qui règle la pression du côté de l'espace annulaire du, au moins un, vérin hydraulique (16, 17) à une valeur moyenne, pour l'essentiel constante, et **en ce que** le dispositif de soupape (34) rattrape la pression du côté de l'espace sous pression du, au moins un, vérin hydraulique (16, 17) en fonction d'une charge variable sur essieu.

**8.** Ressort d'essieu selon la revendication 7, **caractérisé en ce que** la position de niveau du corps d'essieu (12) est saisie en continu et sa moyenne est établie sur un intervalle de temps prédéterminé, et **en ce que** le rattrapage de pression s'effectue lorsque la valeur moyenne de la position de niveau devient supérieure ou inférieure, d'une valeur de consigne, à la plage de tolérance prédéterminée.

**9.** Ressort d'essieu selon l'une des revendications 1 à 8, **caractérisé en ce que** le dispositif de soupape (34) comprend au moins une vanne de régulation de niveau (42, 44) à commande électromagnétique, qui sert au remplissage ou à l'évacuation de fluide hydraulique dans l'espace sous pression (26, 27) et/ou l'espace annulaire (28, 29) et qui est commandé par un circuit de commande (40) électrique en raison de signaux d'un capteur de position (58), de manière qu'à partir des signaux du capteur de position, des premières valeurs moyennes sont formées en continu sur des intervalles de temps de 2 à 10 sec., de préférence d'approximativement 6 sec., et **en ce que** des signaux de commande pour le remplissage ou l'évacuation sont transmis à la, au moins une, vanne de régulation de niveau (42, 44), lorsque la première valeur moyenne présente une différence d'une valeur de consigne par rapport à la plage de tolérance prédéterminée.

**10.** Ressort d'essieu selon la revendication 9, **caractérisé en ce qu'**à partir des signaux du capteur de position, des deuxièmes valeurs moyennes sont formées en continu sur des intervalles de temps de 0,3 à 2 sec., de préférence d'approximativement 0,8 sec., et **en ce que** des signaux de commande pour la fin de l'opération de remplissage ou d'évacuation sont transmis à la, au moins une, vanne de régulation de niveau (42, 44), lorsque la deuxième valeur moyenne se situe à l'intérieur de la plage de tolérance.

**11.** Ressort d'essieu selon l'une des revendications 1 à 10, **caractérisé en ce qu'**il est prévu un capteur pour la saisie directe ou indirecte de la vitesse du véhicule et **en ce que** la régulation de niveau se coupe si une vitesse de marche prédéterminée n'est pas atteinte.

**12.** Ressort d'essieu selon l'une des revendications 1 à 11, **caractérisé en ce que** le dispositif de soupape (34) contient, pour la régulation de niveau, un circuit de commande électrique (40) par lequel les composants électriques et hydrauliques du ressort d'essieu sont contrôlés, et **en ce que**, en cas de panne de l'alimentation électrique ou en cas de survenance d'anomalies dans le ressort d'essieu, il ne se produit aucune régulation de niveau, mais le ressort d'essieu reste maintenu.

**13.** Ressort d'essieu selon l'une des revendications 1 à 12, **caractérisé en ce qu'**il est prévu, entre l'espace sous pression (26, 27) du, au moins un, vérin hydraulique (16, 17) et l'accumulateur associé de fluide sous pression (36, 36a), une vanne proportionnelle (60) réglable permettant de régler et/ou réguler le taux d'amortissement du ressort.

**14.** Ressort d'essieu selon l'une des revendications 1 à 13, **caractérisé en ce** l'essieu est un essieu avant (12) rigide, entraîné, logé de manière oscillante, sur lequel la carrosserie (10) du véhicule s'appuie au moyen de deux vérins hydrauliques (16, 17) disposés de manière approximativement symétrique des deux côtés de l'axe d'oscillation, dirigés pour l'essentiel verticalement, et en ce qu'il est prévu un bras de traction ou de poussée (20) qui est fixé de manière rigide sur l'essieu avant (12) et est articulé au moyen d'une articulation (22) sur la carrosserie (10) du véhicules.

**15.** Ressort d'essieu selon l'une des revendications 1 à 14, **caractérisé en ce que** le bras de traction ou de poussée (20) présente une longueur qui est supérieure au diamètre efficace des pneus des roues (14), en particulier des roues avant.

**16.** Ressort d'essieu selon la revendication 14 ou 15, **caractérisé en ce que** le point d'articulation du vérin hydraulique (16, 17) sur le corps d'essieu avant (12) se situe, par rapport à la ligne médiane du corps d'essieu avant (12), à une distance qui est égale à 1/3 à 1/10, de préférence approximativement 1/5, de la longueur du bras de traction ou de poussée.

**17.** Ressort d'essieu selon l'une des revendications 1 à 16, **caractérisé en ce que** la longueur du bras de traction ou de poussée (20) est dimensionnée de manière que, sous l'effet de l'amortissement, le couple de freinage est largement compensé, mais au moins à 50 %.

**18.** Ressort d'essieu selon l'une des revendications 1 à 17, **caractérisé en ce que** le point d'articulation du bras de traction ou de poussée (20) se situe approximativement dans le plan transversal vertical, défini par le centre de gravité du véhicule.

**19.** Ressort d'essieu selon l'une des revendications 1 à 18, **caractérisé en ce que** le bras de traction ou de poussée (20) inclut et protège, au moins partiellement, l'arbre d'entraînement de l'essieu.

FIG. 1

**FIG. 2**

FIG. 3

EP 0 913 280 B1